Europäisches Patentamt

**European Patent Office**

**Office européen des brevets**

(19)

(11) Veröffentlichungsnummer: **0 052 157**

**A1**

(12) # EUROPÄISCHE PATENTANMELDUNG

(21) Anmeldenummer: 80107091.3

(22) Anmeldetag: 15.11.80

(51) Int. Cl.³: **G 06 F 7/50**

(43) Veröffentlichungstag der Anmeldung:
26.05.82 Patentblatt 82/21

(84) Benannte Vertragsstaaten:
DE FR GB IT NL

(71) Anmelder: Deutsche ITT Industries GmbH
Hans-Bunte-Strasse 19 Postfach 840
D-7800 Freiburg(DE)

(84) Benannte Vertragsstaaten:
DE

(71) Anmelder: ITT INDUSTRIES, INC.
320 Park Avenue
New York, NY 10022(US)

(84) Benannte Vertragsstaaten:
FR GB IT NL

(72) Erfinder: Mlynek, Daniel J., Dr., Ing.
7 rue des Jardins
F-68600 Wolfgantzen(FR)

(74) Vertreter: Stutzer, Gerhard, Dr.
Deutsche ITT Industries GmbH Patent- und
Lizenzabteilung Hans-Bunte-Strasse 19 Postfach 840
D-7800 Freiburg(DE)

(54) Binärer MOS-Carry-Look-Ahead-Paralleladdierer.

(57) Bei diesem werden anstatt üblicher Antivalenzglieder spezielle Äquivalenzglieder aus nur drei Transistoren (LT, T1, T2) verwendet, so daß sich eine erhebliche Platz- und Verlustleistungseinsparung auf dem Halbleiterkörper der integrierten Schaltung ergibt. Ferner werden anstatt der nichtinvertierten die invertierten Stellensignale ($\overline{A0}$, $\overline{B0}$...) zur Bildung der E- und D-Signale verwendet, die mittels einem jeweils pro Binärwertigkeit einmal vorhandenen Komplexgatter zum invertierten Übertragsignal dieser Wertigkeit verknüpft werden. Dieses Komplexgatter besteht aus so vielen UND-Verknüpfungen, wie die Nummer der Stufe angibt, und einer die Ausgänge dieser UND-Verknüpfungen sowie das D-Signal dieser Stufe verknüpfenden NOR-Verknüpfung. Das invertierte Übertragsignal einer Stufe und das invertierte Zwischensummensignal der nächsthöheren Stufe werden mit einem Äquivalenzgatter der erwähnten speziellen Schaltungsart zum nichtinvertierten Summensignal dieser Stufe verknüpft.

Fig. 1

Fig. 2

D. Mlynek - 5

Fl 1064 EP
Mo/ms
14. November 1980

## Binärer MOS-Carry-Look-Ahead-Paralleladdierer

Die Erfindung betrifft binäre MOS-Carry-Look-Ahead-Paralleladdierer, die mittels Isolierschicht-Feldeffekttransistoren gleicher Leitungsart (N- oder P-Kanal) vom Anreicherungstyp integriert sind und mit denen zwei im natürlichen n-stelligen Binärcode dargestellte Zahlen addiert werden können, wobei das Übertragsignal jeder Stelle durch Vorausbestimmung, im Englischen "carry look ahead", gebildet wird.

Derartige Paralleladdierer sind in dem Buch von A. Shah et al "Integrierte Schaltungen in digitalen Systemen", Band 2, Basel 1977, Seiten 94 bis 103 beschrieben. Nach den auf den Seiten 94 und 95 angegebenen Formeln ergibt sich als logische Verknüpfungsgleichung für die Bildung des k-ten Übertragsignals $C_k$:

$$C_k = D_k + E_k D_j + E_k E_j D_i + \ldots + E_k E_j E_i \ldots E_1 D_0 + E_k E_j E_i \ldots E_1 E_0 C(-1),$$

wobei für die Indizes i, j, k gilt:

$$k = j + 1 = i + 2 = \ldots$$

Für die D- und die E-Signale gelten ferner die folgenden Gleichungen:

$$D_k = A_k \cdot B_k,$$

D. Mlynek - 5                                                    Fl 1064 EP

wobei mit dem Multiplizierpunkt die logische UND-Verknüpfung gemeint ist, und

$$Ek = Ak + Bk,$$

wobei mit dem Pluszeichen die logische ODER-Verknüpfung
gemeint ist.

Ferner wird noch ein als Zwischensummen-Signal anzusehendes S'k-Signal wie folgt definiert:

$$S'k = Ak \oplus Bk = \overline{Dk} \cdot Ek,$$

wobei mit dem umkreisten Pluszeichen die Modulo-2-Summenbildung, also die Antivalenz- bzw. Exklusiv-ODER-Verknüpfung, gemeint ist. Schließlich ist für das Summensignal Sk jeder Binärstelle noch die folgende logische
Gleichung gültig:

$$Sk = S'k \oplus Cj,$$

d. h. also, das Summensignal der k-ten Stelle ergibt
sich durch die Antivalenzverknüpfung des Zwischensummensignals S'k dieser Stelle mit dem Übertragsignal der
nächstniederen Stelle.

In Fig. IX.7 auf Seite 96 a.a.O. ist das logische Schaltbild eines nach diesen Prinzipien aufgebauten Paralleladdierers für zwei vierstellige Binärzahlen gezeigt.
Daraus geht hervor, daß zwischen den Eingängen für die
einzelnen Stellensignale Ak, Bk und den entsprechenden
Ausgängen für die Summensignale Sk vier logische Gatter
signalflußmäßig hintereinandergeschaltet sind, wobei

D. Mlynek - 5                                    Fl 1064 EP

unter 'Gatter' jeweils ein logisches Verknüpfungsglied
mit eigenem Arbeitswiderstand zu verstehen ist.

Das genannte Buch enthält auf Seite 97 Hinweise auf entsprechend Fig. IX.7 auf Seite 96 ausgebildete und handelsübliche integrierte Bipolarschaltungen. Eine direkte
Übertragung der anhand von integrierten Bipolarschaltungen erläuterten Grundprinzipien der bekannten Paralleladdierer mit Vorausbestimmung der Übertragsignale auf
mittels Isolierschicht-Feldeffekttransistoren zu integrierende Schaltungen, also auf die sogenannten 'MOS-
Schaltungen', ist nicht ohne weiteres möglich, da die
MOS-Schaltungstechnik zum Teil erheblich von der Bipolar-
Schaltungstechnik abweicht.

Die Erfindung, wie sie in den Ansprüchen gekennzeichnet
ist, löst die Aufgabe, einen nach dem Prinzip der Vorausbestimmung des Übertrags (carry look ahead) arbeitenden
Paralleladdierer zur Realisierung in MOS-Technik anzugeben, der einfacher aufgebaut ist, als es die direkte
und schematische Übertragung der von Bipolarschaltungen
her bekannten Prinzipien ergäbe. Insbesondere sollen
zwischen Ein- und Ausgang bezüglich des Signalflusses
weniger logische Gatter, also solche mit eigenem Arbeitswiderstand, hintereinandergeschaltet sein. Ferner soll
die Anordnung so gewählt sein, daß die Schaltung pro zu
verarbeitende Binärstelle möglichst wenig MOS-Transistoren aufweist; es soll also ein möglichst schneller
und wenig aufwendiger MOS-Paralleladdierer mit Vorausbestimmung des Übertrags angegeben werden.

Die durch die Erfindung erreichten Vorteile sind im wesentlichen darin zu sehen, daß nur drei logische Gatter

D. Mlynek - 5                                    Fl 1064 EP


je Binärstelle signalflußmäßig hintereinandergeschaltet sind, so daß die Geschwindigkeit des Paralleladdierers nach der Erfindung durch die dreifache Gatterlaufzeit gegeben ist. Ferner ergibt sich gegenüber vergleichbaren Anordnungen durch die Verwendung des speziell beanspruchten Äquivalenzglieds mit nur drei Transistoren eine erhebliche Flächen- und Verlustleistungseinsparung auf dem Halbleiterkörper des integrierten Paralleladdierers. Gegenüber der bekannten Anordnung, bei der das Zwischensummensignal durch ein UND-Glied mit vorgeschaltetem Inverter gebildet wird, ergibt sich infolge des dafür vorgesehenen Ersatzes durch das erste Äquivalenzglied nach der Erfindung ein Teil der Flächenreduzierung und ebenso ein Teil der Geschwindigkeitserhöhung.

Die Erfindung wird nun anhand der Figuren der Zeichnung näher erläutert.

Fig. 1    zeigt in Form eines schematischen logischen Schaltbilds ein Ausführungsbeispiel der Erfindung für zwei zu addierende dreistellige Binärzahlen mit einem zusätzlichen Übertrageingang, und

Fig. 2    zeigt das Schaltbild für das bei der Erfindung verwendete Antivalenzglied aus nur drei Transistoren.

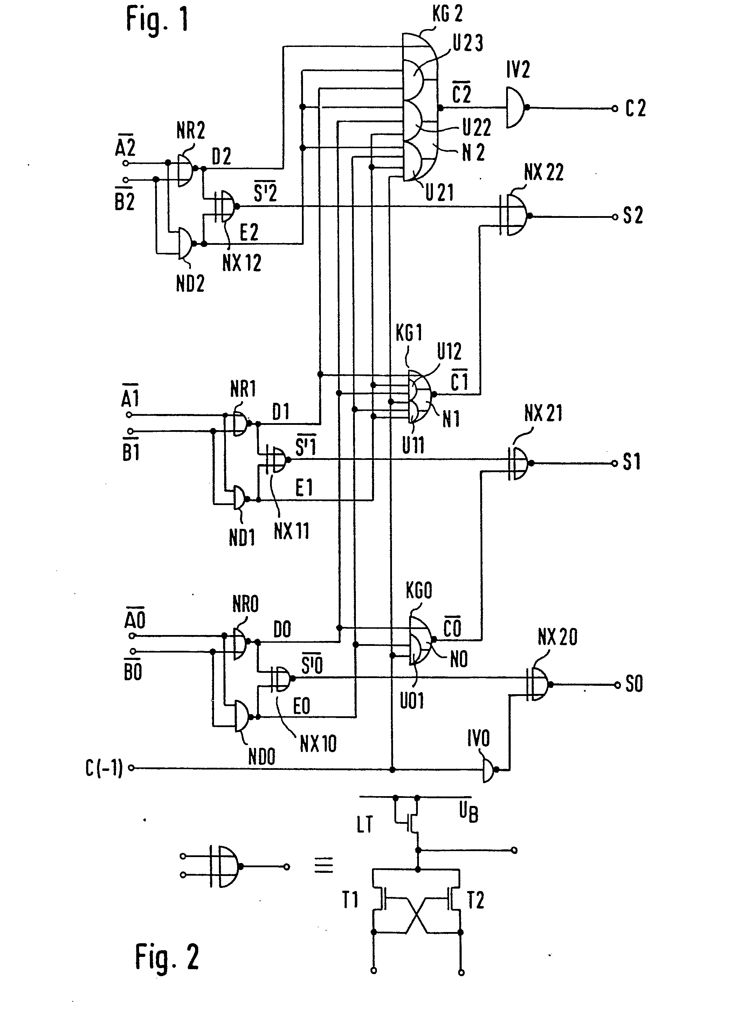

Das in Fig. 1 gezeigte logische Schaltbild eines Ausführungsbeispiels für die beiden dreistelligen Binärzahlen A, B zeigt für die drei Binärstellen mit den Binär-Wertigkeiten 0, 1 und 2 die jeweiligen NOR-Glieder NR0, NR1, NR2 und die entsprechenden NAND-Glieder ND0, ND1, ND2, die jeweils zwei Eingänge haben, denen die inver-

D. Mlynek - 5                                    Fl 1064 EP

tierten Stellensignale $\overline{A0}$, $\overline{B0}$; $\overline{A1}$, $\overline{B1}$; $\overline{A2}$, $\overline{B2}$ zugeführt sind. Am Ausgang der NOR-Glieder NR... entsteht das jeweilige D-Signale D0, D1, D2 und am Ausgang der jeweiligen NAND-Glieder ND... das jeweilige E-Signal E0, E1, E2. Entsprechend der Erfindung wird nun nicht wie beim bekannten Stand der Technik mit einem Antivalenzglied das entsprechende S'-Signal gebildet, sondern mittels dem ersten Äquivalenzglied NX10, NX11, NX12 das entsprechende invertierte Signal gebildet, also die $\overline{S'}$-Signale $\overline{S'0}$, $\overline{S'1}$, $\overline{S'2}$.

Mittels des jeweiligen Komplexgatters KG0, KG1, KG2, das ebenfalls auf einen einzigen Lastwiderstand arbeitet, werden nun aus den D- und E-Signalen sowie aus dem gegenüber der niedersten Stufe gegebenenfalls nächstniederen Übertragsignal die invertierten Übertragsignale $\overline{C0}$, $\overline{C1}$, $\overline{C2}$ gebildet.

Das jeweilige invertierte Zwischensummensignal $\overline{S'...}$ wird mit dem invertierten Übertragsignal $\overline{C...}$ der nächstniederen Stufe im entsprechenden zweiten Äquivalenzgatter NX20, NX21, NX22 verknüpft, an deren Ausgängen die Summensignale S0, S1, S2 auftreten. Dabei ist dem zweiten Äquivalenzglied NX20 der niedersten Wertigkeit das Übertragsignal C(-1) der gegebenenfalls noch niederen Stufe über den Inverter IV0 zugeführt.

Das Komplexgatter besteht in jeder Stufe aus so vielen UND-Verknüpfungen, wie die Nummer dieser Stufe angibt, d. h., das den Binärstellen mit der Wertigkeit 0 zugeordnete Komplexgatter KG0 der ersten Stufe enthält die UND-Verknüpfung U01, das zur Wertigkeit 1 gehörende Komplexgatter KG1 in der zweiten Stufe die beiden UND-Verknüpfungen U11, U12 und das zur Wertigkeit 2 ge-

D. Mlynek - 5                                    Fl 1064 EP

hörende Komplexgatter KG2 in der dritten Stufe die drei
UND-Verknüpfungen U21, U22, U23.

Ein Ausführungsbeispiel zur Verarbeitung von vier-, fünf-
oder sechsstelligen Binärzahlen hätte dann entsprechende
Komplexgatter in der vierten bzw. fünften bzw. sechsten
Stufe mit vier bzw. fünf bzw. sechs UND-Verknüpfungen.

Im Ausführungsbeispiel der Fig. 1 hat die UND-Verknüpfung U01 des Komplexgatters KG0 zwei Eingänge, denen das
Übertragsignal C(-1) und das E-Signal E0 zugeführt sind.
Die erste UND-Verknüpfung U11 im Komplexgatter KG1 der
nächsthöheren Stufe  enthält einen Eingang mehr, dem das
E-Signal E1 dieser Stufe zugeführt ist, während seine
beiden anderen Eingänge jeweils mit dem entsprechenden
Eingang der UND-Verknüpfung U01 des Komplexgatters KG0
verbunden sind. Die erste UND-Verknüpfung U21 im Komplexgatter KG2 enthält wiederum einen Eingang mehr, dem das
E-Signal E2 dieser Stufe zugeführt ist, während die
anderen drei Eingänge mit jeweils einem der drei Eingänge
der ersten UND-Verknüpfung U11 des Komplexgatters KG1
verbunden ist. Die erste UND-Verknüpfung jedes Komplexgatters hat somit einen Eingang mehr als die des Komplexgatters in der nächstniederen Stufe, und diesem einen
zusätzlichen Eingang ist das E-Signal dieser Stufe zugeführt.

Die zweite UND-Verknüpfung U12 des Komplexgatters KG1
hat zwei Eingänge, deren einem das E-Signal E1 dieser
Stufe und deren anderem das D-Signal D0 der nächstniederen Stufe zugeführt ist. Die zweite UND-Verknüpfung U22 des Komplexgatters KG2 weist gegenüber der
zweiten UND-Verknüpfung U12 einen dritten Eingang auf, dem das E-Signal E2 dieser Stufe zugeführt ist, während die beiden anderen Eingänge den beiden Eingängen der zweiten UND-Verknüpfung U12 des Komplexgatters KG1 parallelgeschaltet sind. Jede zweite UND-Verknüpfung in weiteren Komplexgattern hat entsprechend einen weiteren Eingang mehr, dem das E-Signal dieser Stufe zugeführt ist, während die anderen mit den Eingängen der zweiten UND-Verknüpfung der nächstniederen Stufe parallelgeschaltet sind.

Die dritte UND-Verknüpfung U23 des Komplexgatters KG2 enthält zwei Eingänge, deren einem das E-Signal E2 dieser Stufe und deren anderem das D-Signal D1 der nächstniederen Stufe zugeführt ist. Im denkbaren Komplexgatter der nächsthöheren Stufe hat demzufolge die dritte UND-Verknüpfung einen weiteren Eingang für das E-Signal dieser Stufe und eine weitere UND-Verknüpfung mit zwei Eingängen für das E-Signal dieser Stufe und das D-Signal der nächstniederen Stufe. Die Periodizität des jeweiligen Komplexgatters ergibt sich somit rein zwangsläufig.

Jedes der geschilderten Komplexgatter enthält nun noch die zugeordnete NOR-Verknüpfung N0, N1, N2, die die Ausgänge der vorhandenen UND-Verknüpfungen sowie das D-Signal D1, D2, D3 der jeweiligen Stufe entsprechend NOR-verknüpft. Am Ausgang des jeweiligen Komplexgatters KG0, KG1, KG2 entsteht das jeweilige invertierte Übertragsignal $\overline{C0}$, $\overline{C1}$, $\overline{C2}$. Falls das Übertragsignal der höchsten Stufe in nichtinvertierter Form vorliegen soll, ist dem Ausgang des Komplexgatters KG2 der Inverter IV2 noch nachzuschalten.

In Fig. 2 ist die bei der Erfindung zur Anwendung gelangende spezielle Innenschaltung der Äquivalenzglie-

D. Mlynek - 5                                          Fl 1064 EP

der NX... gezeigt. Sie besteht lediglich aus drei Transistoren, nämlich dem Lasttransistor LT und den beiden nach Art einer Speicherzelle über Kreuz geschalteten Transistoren T1, T2. Der Lasttransistor LT ist dadurch als Widerstand geschaltet, daß sein Gate an der Betriebsspannung $U_B$ liegt. In Fig. 2 handelt es sich dabei um einen Anreicherungs-Transistor. Es ist jedoch auch möglich und kann besonders vorteilhaft sein, als Lasttransistor LT einen Verarmungstyp-Transistor zu verwenden; dann ist sein Gate mit dem Verbindungspunkt mit den beiden Transistoren T1, T2 zu verbinden, der im übrigen der Signalausgang ist.

Der gesteuerte Strompfad der beiden Transistoren T1, T2 liegt einerseits am Lasttransistor LT und somit am erwähnten Ausgang, und andererseits dient er als der jeweilige Signaleingang. Das Gate des Transistors T1 ist mit dem Signaleingang des Transistors T2 und dessen Gate mit dem Signaleingang des Transistors T1 verbunden. Die Flächendimensionierung des Lasttransistors LT und der beiden Transistoren T1, T2 ist wie üblich nach der bekannten Ratio-Technik vorzunehmen.

Das Prinzip der Erfindung, das insbesondere in der Verwendung der ersten und der zweiten Äquivalenzglieder in Verbindung mit den sozusagen "invertierenden" Komplexgattern besteht, ist auch bei Paralleladdierern mit Vorbestimmung des Übertrags in mehreren Schichten (multi-level carry look ahead) anwendbar, wie sie im eingangs genannten Buch auf den Seiten 98 bis 103 beschrieben sind.

D. Mlynek - 5

Fl 1064 EP
Mo/ms
14. November 1980

Patentansprüche

1. Monolithisch mittels Isolierschicht-Feldeffekttransistoren gleicher Leitungsart (N- oder P-Kanal) vom Anreicherungstyp integrierter Paralleladdierer für zwei im natürlichen n-stelligen Binärcode dargestellte Zahlen (A, B) mit Vorausbestimmung des Übertragsignals (Ck) jeder Stelle (binärer MOS-Carry-Look-Ahead-Paralleladdierer), das nach der Formel

$$C_k = D_k + E_k D_j + E_k E_j D_i + \ldots + E_k E_j E_i \ldots E_1 D_0 + E_k E_j E_i \ldots E_1 E_0 C_{(-1)}$$

gebildet wird, wobei für die Indizes i, j, k und die Signale D..., E... gilt:

$$k = j + 1 = i + 2 = \ldots$$
$$D_k = A_k \cdot B_k \quad \text{(UND-Funktion)}$$
$$E_k = A_k + B_k \quad \text{(ODER-Funktion)}$$

und wobei ferner S'k- und Sk-Signale wie folgt definiert sind:

$$S'_k = A_k \oplus B_k \quad \text{(Antivalenz-Funktion)}$$
$$\phantom{S'_k} = \overline{D_k} \cdot E_k$$
$$S_k = S'_k \oplus C_j$$

D. Mlynek - 5                                    Fl 1064 EP

gekennzeichnet durch folgende Merkmale:

- die D-Signale (D0, D1, D2) sind pro Stelle mit einem die invertierten Stellensignale ($\overline{A0}$, $\overline{B0}$; $\overline{A1}$, $\overline{B1}$: $\overline{A2}$, $\overline{B2}$) verknüpfenden NOR-Glied (NR1, NR2, NR3) gebildet,

- die E-Signale (E0, E1, E2) sind pro Stelle mit einem die invertierten Stellensignale ($\overline{A0}$, $\overline{B0}$...) verknüpfenden NAND-Glied (ND1, ND2, ND3) gebildet,

- anstelle der S'-Signale sind die $\overline{S'}$-Signale ($\overline{S'0}$, $\overline{S'1}$, $\overline{S'2}$) mit einem ersten Äquivalenzglied (NX10, NX11, NX12) gebildet,

- die S-Signale (S0, S1, S2) sind mit einem zweiten Äquivalenzglied (NX20, NX21, NX22) gebildet, dem das invertierte Übertragsignal ($\overline{C(-1)}$, $\overline{C0}$, $\overline{C1}$) der nächstniederen Stelle und das $\overline{S'}$-Signal ($\overline{S'0}$...) zugeführt ist,

- das erste und das zweite Äquivalenzglied (NX10..., NX20...) besteht jeweils aus einem Lasttransistor (LT) und zwei Transistoren (T1, T2), von denen der gesteuerte Strompfad einerseits am Lasttransistor (LT) liegt und andererseits als Signaleingang dient und wobei das Gate des einen (T1) am Signaleingang des anderen Transistors (T2) und umgekehrt liegt, und

- das invertierte Übertragsignal ($\overline{C0}$...) ist pro Stelle mit einem auf einen einzigen Lastwiderstand arbeitenden Komplexgatter (KG0, KG1, KG2) gebildet, das die entsprechend der Formel erforderlichen UND-Verknüpfungen (U01, U11, U21; U12, U22; U23) und eine deren Ausgänge verknüpfende NOR-Verknüpfung (N0; N1; N2) umfaßt.

D. Mlynek - 5                              Fl 1064 EP


2. Paralleladdierer nach Anspruch 1, dadurch gekennzeichnet, daß als Lasttransistoren Verarmungstyp-
   Transistoren dienen.

Fig. 1

Fig. 2

0052157

Europäisches
Patentamt

**EUROPÄISCHER RECHERCHENBERICHT**

Nummer der Anmeldung

EP 80 10 7091

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | IEEE JOURNAL OF SOLID STATE CIRCUITS Band SC-13, Nr.5, Oktober 1978, Seiten 565-572 New York, U.S.A.. H.J. DE MAN et al.: "High-speed NMOS circuits for ROM-accumulator and multiplier type digital filters"<br><br>* Figuren 9-10; Seite 570, linke Spalte, Absatz 4 *<br><br>-- | 1 |
| | NATIONAL TECHNICAL REPORT, Band 22, Nr. 5, Oktober 1976, Seiten 601-606 Osaka, JP. T. KYOGOKU et al.: "CMOS·high-speed full-adder for micro-processors."<br><br>* Seite 601, "Abstract"; Figur 6 *<br><br>---- | 1 |

**KLASSIFIKATION DER ANMELDUNG (Int. Cl.)**

G 06 F 7/50

**RECHERCHIERTE SACHGEBIETE (Int. Cl.)**

G 06 F 7/50

**KATEGORIE DER GENANNTEN DOKUMENTE**

X: von besonderer Bedeutung

A: technologischer Hintergrund

O: nichtschriftliche Offenbarung

P: Zwischenliteratur

T der Erfindung zugrunde liegende Theorien oder Grundsätze

E: kollidierende Anmeldung

D in der Anmeldung angeführtes Dokument

L aus andern Gründen angeführtes Dokument

& Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 28-07-1981 | FORLEN |

EPA form 1503.1  06.78